# EUROPÄISCHE PATENTANMELDUNG

(11) **EP 4 530 061 A1**
(43) Veröffentlichungstag der Anmeldung: **02.04.2025**
(21) Anmeldenummer: 23200081.0
(22) Anmeldetag: 27.09.2023
(51) Int. Cl.: B32B 17/10, B60J 1/02, B60K 35/23, G02B 27/01

(54) **VERBUNDSCHEIBE FÜR EIN HOLOGRAPHISCHES HEAD-UP-DISPLAY**

(71) Anmelder: Saint-Gobain Glass France, 92400 Courbevoie (FR)
(72) Erfinder: KEWITZ, Markus, 52134 Herzogenrath (DE); KLEIN, Marcel, 52134 Herzogenrath (DE); MÜLLER, Michael, 52134 Herzogenrath (DE)
(74) Vertreter: Hermanns, Ellen

(57) **Zusammenfassung**

Die vorliegende Erfindung betrifft eine Verbundscheibe (100), mindestens umfassend eine Außenscheibe (1), eine Verbindungsschicht (3), ein Hologrammelement (4) mit mindestens einem Hologramm, eine thermoplastische Zwischenschicht (5) und eine Innenscheibe (2), wobei die Verbindungsschicht (3) zwischen der Außenscheibe (1) und der Innenscheibe (2) angeordnet ist und die thermoplastische Zwischenschicht (5) unmittelbar benachbart zur Außenscheibe (1) oder unmittelbar benachbart zur Innenscheibe (2) angeordnet ist und eine Aussparung (6) aufweist, in welcher das Hologrammelement (4) angeordnet ist.

## Beschreibung

Die Erfindung betrifft eine Verbundscheibe, insbesondere für ein holographisches Head-Up-Display, ein Verfahren zur Herstellung einer solchen Verbundscheibe, sowie die Verwendung einer solchen Verbundscheibe.

Verbundscheiben werden heutzutage an vielen Orten, insbesondere im Fahrzeugbau, verwendet. Dabei umfasst der Begriff Fahrzeug unter anderem Straßenfahrzeuge, Flugzeuge, Schiffe, landwirtschaftliche Maschinen oder auch Arbeitsgeräte.

Auch in anderen Bereichen werden Verbundscheiben verwendet. Hierzu zählen beispielsweise Gebäudeverglasungen oder Informationsdisplays, z.B. in Museen oder als Werbedisplays.

Moderne Automobile werden in zunehmendem Maße mit sogenannten Head-Up-Displays (HUDs) ausgestattet. Mit einem Projektor, typischerweise im Bereich des Armaturenbretts, werden Bilder auf den HUD-Bereich der Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit oder Navigations- und Warnhinweise, welche der Fahrer wahrnehmen kann, ohne seinen Blick von der Fahrbahn wenden zu müssen. Head-Up-Displays können so wesentlich zur Steigerung der Verkehrssicherheit beitragen. Im Fahrzeugbereich wird die Projektionseinrichtung z.B. auf dem Armaturenbrett angeordnet, so dass das projizierte Bild auf der nächstliegenden Glasfläche der zum Betrachter hin geneigten Verbundglasscheibe in Richtung des Betrachters reflektiert wird (vgl. z.B. das europäische Patent EP 0 420 228 B1 oder die deutsche Offenlegungsschrift DE 10 2012 211 729 A1).

WO 2020/017502 A1 offenbart ein Verbundglas mit einer Klebeschicht, die eine Dicke aufweist, die die Verzerrung eines HUD-Bildes verringert und hervorragende Entgasungseigenschaften im Herstellungsprozess des Verbundglases aufweist. Dieses Verbundglas verfügt über eine Zwischenschichtfolie zwischen einer äußeren Glasplatte und einer inneren Glasplatte und ist mit einem Anzeigebereich ausgestattet, in dem Informationen durch Reflexion eines projizierten Bildes aus dem Innenraum eines Fahrzeugs angezeigt werden. In mindestens einem Teil des Anzeigebereichs ist ein Film zwischen der äußeren Glasplatte oder der inneren Glasplatte und der Zwischenschicht angeordnet und durch eine Klebeschicht an der Glasplatte befestigt. Die Klebeschicht hat eine Dicke von 0,2 µm bis 70 µm und einen höheren Erweichungspunkt als die Glasübergangstemperatur der Zwischenschicht.

Bei den vorstehend beschriebenen Head-Up-Displays ist die optische Gesetzlichkeit zu berücksichtigen, dass Einfalls- und Ausfallswinkel des auf die Windschutzscheibe auftreffenden und von der Windschutzscheibe reflektierten Lichts stets gleich sind. Dies schränkt in nachteiliger Weise die Gestaltung der Windschutzscheibe und deren Einbaumöglichkeiten ein. Eine Lösung dieses Problems ist die Integration von Hologrammelementen in die Windschutzscheibe, bei denen keine Lichtreflexion, sondern eine Beugung von auftreffendem Licht entsprechend des aufgezeichneten Hologramms erfolgt. Solche Hologrammelemente enthalten vorteilhaft ein Hologramm, das durch holographische Belichtung eines holographischen Aufzeichnungsmediums so erzeugt wurde, dass die Funktion eines optischen Spiegels für eine bestimmte Wellenlänge und Einstrahlwinkel des einfallenden Lichts implementiert wird. Durch diese Spiegelfunktion des Hologramms können beliebige Informationen eines bildgebenden Projektors in eine Bildebene projiziert werden, die vom Betrachter in einem bestimmten Raumbereich, der gemeinhin als "Eye-Box" bezeichnet wird, sichtbar sind. Da die holographische Spiegelfunktion tatsächlich auf einer Beugung von Licht beruht, ist die für eine Spiegelung geltende optische Gesetzlichkeit, wonach der Einfallswinkel dem Ausfallswinkel entspricht, nicht anwendbar. Dies hat den Vorteil, dass die Eye-Box auch außerhalb von Bereichen positioniert sein kann, in denen durch Reflexion an der Verbundscheibe auftretende Nebenbilder (Ghost-Bilder) sichtbar sind. Zudem gibt es eine größere Variabilität für die Einbausituation von Windschutzscheiben, die insbesondere auch sehr flach in ein Fahrzeug eingebaut werden können.

Für Head-Up-Displays können Hologrammelemente mit Hologrammen mit Spiegelfunktion genutzt werden, die zwischen den Einzelscheiben einer Windschutzscheibe einlaminiert sind. Hologramme mit Spiegelfunktion, die auch als "Reflexionshologramme" bezeichnet werden, sind dem Fachmann wohlbekannt und in der Patentliteratur vielfach beschrieben, siehe beispielsweise DE102017212451A1, WO 2012/156124A1 und US 2019/0056596A1. Die Hologramme eines holographischen Head-Up-Displays sind in der Regel so ausgelegt, dass sie nur auf Licht in einem engen Wellenlängen- und Winkelbereich, welches von einem innen angeordneten Projektor ausgestrahlt wird, ansprechen.

Windschutzscheiben mit einem Hologrammelement bestehen in aller Regel aus zwei Scheiben, typischer Weise aus Glas, die über zwei thermoplastische Zwischenschichten fest miteinander verbunden (laminiert) sind, wobei das Hologrammelement zwischen zwei thermoplastischen Zwischenschichten angeordnet ist. Hologrammelemente werden typischerweise in Folienform bereitgestellt und in die Verbundscheibe laminiert. Bekannt ist die Vorgehensweise, bei der eine Substratfolie aus einem Polymer mit einem auf einer Oberfläche aufgebrachten holographischen Aufzeichnungsmedium (Photopolymer) mit einer weiteren Substratfolie aus einem Polymer bedeckt wird, sodass das holographische Aufzeichnungsmedium zwischen den beiden Polymerfolien vor mechanischen und chemischen Einwirkungen gut geschützt ist. Der Stapel aus den beiden Polymerfolien mit dem dazwischen angeordneten holographischem Aufzeichnungsmedium wird zwischen den beiden Glasscheiben der Windschutzscheibe laminiert, wobei beiderseits des Stapels eine thermoplastische Zwischenschicht angeordnet wird.

EP3461636B1 offenbart ein laminiertes holographisches Display, umfassend eine erste Glasschicht, eine zweite Glasschicht, eine belichtete Photopolymerfilmschicht, umfassend ein Hologramm, wobei die belichtete Photopolymerfilmschicht zwischen der ersten Glasschicht und der zweiten Glasschicht angeordnet ist, eine Polymerfilmschicht, die zwischen der belichteten Photopolymerfilmschicht und der zweiten Glasschicht angeordnet ist, und eine zusätzliche Filmschicht, die zwischen der belichteten Photopolymerfilmschicht und der ersten Glasschicht angeordnet ist.

In US5066525A ist eine Verbundglasscheibe offenbart, in die eine Hologrammfolie integriert ist, wobei es sich bei der Verbundglasscheibe beispielsweise um eine Fahrzeugwindschutzscheibe handelt, bei der die Hologrammfolie als Kombinierer eines Head-up-Displays verwendet wird. Als Klebemittel verwendet die Verbundglasscheibe entweder eine Folie oder zwei Folien aus Polyvinylbutyralharz (PVB). Im ersteren Fall wird die Hologrammfolie zwischen den PVB-Film und eine der Glasplatten gelegt und durch einen transparenten Harz- oder Glasfilm vom PVB-Film abgeschirmt, der verhindert, dass der im PVB-Film enthaltene Weichmacher auf die Hologrammfolie übertragen wird. Im letzteren Fall wird die Hologrammfolie zwischen die beiden Folien aus PVB-Folie gelegt und von jeder PVB-Folie durch eine transparente Harz- oder Glasfolie mit der oben genannten Eigenschaft abgeschirmt.

In der Praxis hat sich gezeigt, dass Windschutzscheiben, in denen das Hologrammelement zwischen zwei thermoplastischen Zwischenschichten angeordnet ist, optische Fehler aufweisen.

Die Aufgabe der vorliegenden Erfindung besteht darin, eine verbesserte Verbundscheibe für ein holographisches Head-Up-Display zur Verfügung zu stellen, bei der insbesondere optische Fehler vermieden werden.

Die Aufgabe der vorliegenden Erfindung wird durch eine Verbundscheibe gemäß dem unabhängigen Anspruch 1 gelöst. Bevorzugte Ausführungen gehen aus den Unteransprüchen hervor. Ein Verfahren zur Herstellung einer erfindungsgemäßen Verbundscheibe und deren Verwendung gehen aus weiteren unabhängigen Ansprüchen hervor.

Die Erfindung betrifft eine Verbundscheibe mindestens umfassend eine Außenscheibe, Eine Verbindungsschicht, ein Hologrammelement mit mindestens einem Hologramm, eine thermoplastische Zwischenschicht und eine Innenscheibe.

Die Verbindungsschicht ist zwischen der Außenscheibe und der Innenscheibe angeordnet und die thermoplastische Zwischenschicht ist unmittelbar benachbart zur Außenscheibe oder unmittelbar benachbart zur Innenscheibe angeordnet.

Erfindungsgemäß weist die thermoplastische Zwischenschicht eine Aussparung auf, in welcher das Hologrammelement angeordnet ist.

Dadurch, dass die thermoplastische Zwischenschicht unmittelbar benachbart zur Außenscheibe oder unmittelbar benachbart zur Innenscheibe angeordnet ist und eine Aussparung aufweist, in welcher das Hologrammelement angeordnet ist, ist auch das Hologrammelement unmittelbar benachbart zur Außenscheibe oder unmittelbar benachbart zur Innenscheibe angeordnet.

Die Erfinder haben festgestellt, dass die optischen Fehler in Verbundscheiben, in denen das Hologrammelement zwischen zwei thermoplastischen Zwischenschichten angeordnet ist, auf eine Welligkeit des Hologrammelements zurückzuführen sind und bei einer Anordnung des Hologrammelements unmittelbar benachbart zur Außenscheibe oder unmittelbar benachbart zur Innenscheibe eine Welligkeit des Hologrammelements und somit auch unerwünschte optische Defekte vermieden werden.

Es versteht sich, dass die äußeren Abmessungen der Aussparung in der thermoplastischen Zwischenschicht im Wesentlichen den äußeren Abmessungen des Hologrammelements entsprechen, d.h. die Aussparung und das Hologrammelement haben im Wesentlichen die gleiche Geometrie. Im Falle eines rechteckigen Hologrammelements ist somit die Aussparung ebenfalls rechteckig und die Länge und die Breite der Aussparung entspricht im Wesentlichen der Länge und der Breite des Hologrammelements. Zudem versteht es sich, dass die Dicke der thermoplastischen Zwischenschicht im Wesentlichen der Dicke des Hologrammelements entspricht. Das Hologrammelement ist innerhalb der Aussparung in der thermoplastischen Zwischenschicht angeordnet und füllt diese im Wesentlichen vollständig aus. Die thermoplastische Zwischenschicht hat somit die Form eines umlaufenden Rahmens um das Hologrammelement. Das Hologrammelement und die thermoplastische Zwischenschicht liegen somit in der gleichen Ebene und ihre Kanten liegen einander gegenüber, wobei die Kantenflächen sich im Wesentlichen orthogonal zu den Scheibenflächen der Verbundscheibe verhalten. Die thermoplastische Zwischenschicht gleicht in der erfindungsgemäßen Verbundscheibe einen lokalen Dickenunterschied zwischen dem Bereich mit Hologrammelement und dem umgebenden Bereich aus. Die thermoplastische Zwischenschicht ist erfindungsgemäß nicht überlappend mit dem Hologrammelement, sondern lediglich in dessen Nachbarschaft angrenzend an die umlaufende Kante des Hologrammelementes angebracht, wodurch diese Kompensation von Dickenunterschieden möglich wird. Die Verbundscheibe mit Hologrammelement weist demnach nicht nur eine verbesserte Optik und Alterungsbeständigkeit, sondern auch eine verbesserte Haltbarkeit durch Minimierung von Spannungen sowie Glasbruch auf. Dies sind weitere Vorteile der erfindungsgemäßen Verbundscheibe.

Im Wesentlichen die gleiche Dicke bedeutet, dass die Dicke um maximal 50 µm, bevorzugt um maximal 20 µm, besonders bevorzugt um maximal 10 µm voneinander abweicht. Im Wesentlichen die gleichen äußeren Abmessungen bedeutet, dass die äußeren Abmessungen um maximal 1 mm, bevorzugt um maximal 0,5 mm voneinander abweichen.

In einer besonders bevorzugten Ausführungsform entsprechen die äußeren Abmessungen der Aussparung in der thermoplastischen Zwischenschicht den äußeren Abmessungen des Hologrammelements, d.h. die Aussparung und das Hologrammelement haben die gleiche Geometrie. Im Falle eines rechteckigen Hologrammelements ist somit die Aussparung ebenfalls rechteckig und die Länge und die Breite der Aussparung entspricht der Länge und der Breite des Hologrammelements. Zudem entspricht in dieser besonders bevorzugten Ausführungsform die Dicke der thermoplastischen Zwischenschicht der Dicke des Hologrammelements. Die thermoplastische Zwischenschicht hat somit in dieser Ausführungsform die Form eines umlaufenden Rahmens und steht in unmittelbarem Kontakt zur umlaufenden Kante des Hologrammelements. Das Hologrammelement und die thermoplastische Zwischenschicht liegen in dieser Ausführungsform somit in der gleichen Ebene und berühren sich entlang ihrer Kanten, wobei ihre Kontaktfläche sich im Wesentlichen orthogonal zu den Scheibenflächen der Verbundscheibe verhält. Die thermoplastische Zwischenschicht ist in dieser Ausführungsform nicht überlappend mit dem Hologrammelement, sondern lediglich in dessen unmittelbarer Nachbarschaft angrenzend an die umlaufende Kante des Hologrammelementes angebracht, wodurch diese Kompensation von Dickenunterschieden möglich wird. Die Verbundscheibe mit Hologrammelement weist in dieser besonders bevorzugten Ausführungsform somit ebenfalls nicht nur eine verbesserte Optik und Alterungsbeständigkeit, sondern auch eine verbesserte Haltbarkeit durch Minimierung von Spannungen sowie Glasbruch auf.

Die Außenscheibe und die Innenscheibe weisen jeweils eine außenseitige Oberfläche, d.h. eine Außenfläche, und eine innenraumseitige Oberfläche, d.h. eine Innenfläche, auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind in der erfindungsgemäßen Verbundscheibe einander zugewandt.

Die Oberflächen der Glasscheiben werden typischerweise wie folgt bezeichnet:
Die außenseitige Oberfläche der Außenscheibe wird als Seite I bezeichnet. Die innenraumseitige Oberfläche der Außenscheibe wird als Seite II bezeichnet. Die außenseitige Oberfläche der Innenscheibe wird als Seite III bezeichnet. Die innenraumseitige Oberfläche der Innenscheibe wird als Seite IV bezeichnet.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe bezeichnet. Mit Außenscheibe wird die der äußeren Umgebung zugewandte Scheibe bezeichnet.

Das Hologrammelement bezeichnet das holographische Medium, in dem das mindestens eine Hologramm enthalten ist. Das Hologrammelement umfasst ein photosensitives Material, d.h. ein holographisches Material. In diesem kann durch Belichtung mit einer geeigneten Lichtquelle ein Hologramm aufgezeichnet werden. In der fertigen Verbundscheibe ist das holographische Material des Hologrammelements nicht mehr lichtempfindlich, da das holographische Material während des Prozesses soweit verändert wird, dass keine weitere Aufzeichnung eines Hologramms mehr möglich ist. Bevorzugt handelt es sich bei dem holographischen Material um ein Photopolymer. Dem Fachmann sind geeignete Photopolymere bekannt.

Bevorzugt umfasst das Hologrammelement ein Photopolymer und mindestens eine Substratschicht.

Dem Fachmann sind geeignete Materialien für die mindestens eine Substratschicht bekannt. In einer bevorzugten Ausführungsform, enthält die mindestens eine Substratschicht ein polymeres Material gewählt aus Polyethylenterephthalat (PET), Polyethylen (PE), Polymethylmethacrylat (PMMA), Polycarbonat (PC), Polyamid (PA), Polyvinylchlorid (PVC) und/oder Cellulosetriacetat (TAC) oder besteht daraus.

Die mindestens eine Substratschicht weist bevorzugt eine Dicke zwischen 20 µm und 150 µm, besonders bevorzugt zwischen 20 µm und 100 µm, auf.

In bevorzugten Ausführungsformen umfasst das Hologrammelement ein Photopolymer und eine Substratschicht und ist derart in der Aussparung in der thermoplastischen Zwischenschicht angeordnet, dass die Substratschicht unmittelbar benachbart zur Verbindungsschicht angeordnet ist.

Wie oben beschrieben ist die thermoplastische Zwischenschicht erfindungsgemäß unmittelbar benachbart zur Außenscheibe oder unmittelbar benachbart zur Innenscheibe angeordnet. Folglich ist in der Ausführungsform, in der die thermoplastische Zwischenschicht unmittelbar benachbart zur Außenscheibe angeordnet ist und das Hologrammelement ein Photopolymer und eine Substratschicht umfasst und derart in der Aussparung in der thermoplastischen Zwischenschicht angeordnet ist, dass die Substratschicht unmittelbar benachbart zur Verbindungsschicht angeordnet ist, das Photopolymer unmittelbar benachbart zur Außenscheibe angeordnet. Folglich ist in der Ausführungsform, in der die thermoplastische Zwischenschicht unmittelbar benachbart zur Innenscheibe angeordnet ist und das Hologrammelement ein Photopolymer und eine Substratschicht umfasst und derart in der Aussparung in der thermoplastischen Zwischenschicht angeordnet ist, dass die Substratschicht unmittelbar benachbart zur Verbindungsschicht angeordnet ist, das Photopolymer unmittelbar benachbart zur Innenscheibe angeordnet.

In einer besonders bevorzugten Ausführungsform einer erfindungsgemäßen Verbundscheibe umfasst das Hologrammelement ein Photopolymer und zwei Substratschichten und das Photopolymer ist zwischen den beiden Substratschichten angeordnet.

Hologrammelemente mit einem zwischen zwei Substratschichten angeordneten Photopolymer sind beispielweise in US 2019/0101865 A1 beschrieben.

Es versteht sich, dass bei Vorhandensein von zwei oder mehr Substratschichten die Materialien der Substratschichten unabhängig voneinander gewählt werden können. Ebenso können bei Vorhandensein von zwei oder mehr Substratschichten diese unterschiedlich dick sein.

Das Photopolymer weist bevorzugt eine Dicke zwischen 10 µm und 100 µm, besonders bevorzugt zwischen 15 µm und 30 µm, auf.

Die Verbindungsschicht ist bevorzugt eine thermoplastische Schicht oder ein optisch klarer Kleber, ein sogenannter *optical clear adhesive* (OCA).

Dem Fachmann sind geeignete optische klare Kleber, sogenannte *optical clear adhesives* (OCA) bekannt.

In einer Ausführungsform enthält der optisch klare Kleber Polyurethan (PU), Polyacrylat, Polyacetatharz, Gießharz, Silikon oder ein Copolymer oder Gemisch davon oder besteht daraus. Vorteilhaft besteht der optisch klare Kleber aus einem Gießharz, insbesondere auf Polyurethan-, Polyacrylat- oder Silikon-Basis. Vorteilhaft basiert der optisch klare Kleber auf Polyacrylat oder Polyurethan. Dies sind gängige und erprobte Materialien für der optisch klare Kleber, die im Handel verfügbar sind, auch in Folienform.

In den Ausführungsformen, in denen die Verbindungsschicht als thermoplastische Schicht ausgebildet ist, enthält die Verbindungsschicht bevorzugt zumindest Polyvinylbutyral (PVB), Ethylenvinylacetat (EVA), thermoplastisches Polyurethan (TPU) oder Gemische oder Copolymere oder Derivate davon, besonders bevorzugt thermoplastisches Polyurethan (TPU) oder Polyvinylbutyral (PVB).

Eine als eine thermoplastische Schicht ausgebildete Verbindungsschicht kann durch eine einzelne Folie ausgebildet sein oder auch durch mehr als eine Folie. Es kann sich bei der Verbindungsschicht auch um eine Verbindungsschicht mit funktionellen Eigenschaften handeln, insbesondere eine Verbindungsschicht mit akustisch dämpfenden Eigenschaften, eine Infrarotstrahlung reflektierende Verbindungsschicht, eine Infrarotstrahlung absorbierende Verbindungsschicht, eine UV-Strahlung absorbierende Verbindungsschicht, eine zumindest abschnittsweise gefärbte Verbindungsschicht und/oder eine zumindest abschnittsweise getönte Verbindungsschicht.

Die Dicke der Verbindungsschicht beträgt bevorzugt von 0,2 mm bis 2 mm, besonders bevorzugt von 0,3 mm bis 1 mm, beispielsweise 0,38 mm oder 0,76 mm.

Die thermoplastische Zwischenschicht enthält bevorzugt zumindest Polyvinylbutyral (PVB), Ethylenvinylacetat (EVA), thermoplastisches Polyurethan (TPU) oder Gemische oder Copolymere oder Derivate davon, besonders bevorzugt thermoplastisches Polyurethan (TPU) oder Polyvinylbutyral (PVB).

Die thermoplastische Zwischenschicht kann durch eine einzelne Folie ausgebildet sein oder auch durch mehr als eine Folie.

In einer besonders bevorzugten Ausführungsform ist die thermoplastische Zwischenschicht unmittelbar benachbart zur Innenscheibe angeordnet. Diese Ausführungsform ist besonders bevorzugt, da in dieser Ausführungsform auch das Hologrammelement unmittelbar benachbart zur Innenscheibe angeordnet ist. Somit ist zwischen dem Hologrammelement und der Innenscheibe keine Verbindungsschicht angeordnet und wenn eine solche Verbundscheibe von innen von einen Projektor bestrahlt wird, muss das vom Projektor ausgestrahlte Licht keine Verbindungsschicht passieren, bevor es auf das Hologrammelement trifft.

Das Hologrammelement ist in einer als Windschutzscheibe ausgebildeten Verbundscheibe vorteilhafterweise innerhalb des zentralen Sichtfelds (sogenanntes Sichtfeld B) angeordnet. Das Hologrammelement kann, aber muss nicht den gesamten Bereich abdecken, und kann auch darüber hinausragen.

Die Verbundscheibe kann beispielsweise die Windschutzscheibe, die Seitenscheibe oder die Dachscheibe eines Fahrzeugs oder eine andere Fahrzeugverglasung sein, beispielsweise eine Trennscheibe in einem Fahrzeug, bevorzugt in einem Schienenfahrzeug oder einem Bus. Alternativ kann die Verbundscheibe eine Architekturverglasung, beispielsweise in einer Außenfassade eines Gebäudes oder eine Trennscheibe im Innern eines Gebäudes sein.

In einer Ausführungsform umfasst die Verbundscheibe zusätzlich eine opake Maskierungsschicht. Die opake Maskierungsschicht befindet sich bevorzugt in einem umlaufenden Randbereich der Verbundscheibe und verdeckt insbesondere den Blick auf Anbauteile oder Verklebungen. Windschutzscheiben weisen typischerweise eine umlaufende periphere opake Maskierungsschicht in Form eines Abdeckdrucks aus einer opaken Emaille auf, der insbesondere dazu dient, den zum Einbau der Scheibe verwendeten Kleber vor UV-Strahlung zu schützen und optisch zu verdecken.

Bevorzugt erstreckt sich das Hologrammelement über mindestens 30%, besonders bevorzugt über mindestens 50 %, ganz besonders bevorzugt über mindestens 80 % der Verbundscheibe. Damit können sichtbare Übergänge zwischen dem Hologrammelement und einem Abschnitt ohne Hologrammelement im sichtbaren Bereich der Verbundscheibe vermieden werden.

Alternativ kann sich das Hologrammelement auch nur über mindestens 5 % und weniger als 30 % der Verbundscheibe erstrecken.

Besonders bevorzugt wird das Hologrammelement in Ausführungsformen, in denen die Verbundscheibe zusätzlich eine opake Maskierungsschicht umfasst, so angeordnet, dass die umlaufende Kante des Hologrammelements im Bereich der opaken Maskierungsschicht angeordnet ist. Dies hat den Vorteil, dass die opake Maskierungsschicht den Übergang vom Hologrammelement zu der umgebenden thermoplastischen Zwischenschicht verdeckt. Die opake Maskierungsschicht befindet sich wie oben beschrieben üblicherweise im Randbereich der Verbundscheibe und verdeckt den Blick auf Anbauteile oder Verklebungen. Windschutzscheiben weisen typischerweise eine umlaufende periphere opake Maskierungsschicht in Form eines Abdeckdrucks aus einer opaken Emaille auf, der insbesondere dazu dient, den zum Einbau der Scheibe verwendeten Kleber vor UV-Strahlung zu schützen und optisch zu verdecken. Dieser Abdeckdruck wird bevorzugt dazu verwendet, auch die umlaufende Kante des Hologrammelements zu verdecken. Bevorzugt weist sowohl die Außenscheibe als auch die Innenscheibe der Verbundscheibe einen solchen Abdeckdruck auf, so dass die Durchsicht im Randbereich von beiden Seiten gehindert wird.

In einer besonders bevorzugten Ausführungsform umfasst die Verbundscheibe zusätzlich eine in einem umlaufenden Randbereich angeordnete Maskierungsschicht und das Hologrammelement erstreckt sich über mindestens 50 %, besonders bevorzugt über mindestens 80 % der Verbundscheibe, wobei die umlaufende Kante des Hologrammelements im Bereich der opaken Maskierungsschicht angeordnet ist.

Der Abdeckdruck kann opak und vollflächig ausgebildet sein. Der Abdeckdruck kann zumindest abschnittsweise auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung.

In einer Ausführungsform umfasst somit die Verbundscheibe zusätzlich eine in einem umlaufenden Randbereich angeordnete opake Maskierungsschicht und die umlaufende Kante des Hologrammelements ist im Bereich der opaken Maskierungsschicht angeordnet.

Die Außenscheibe und die Innenscheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Silikat-Glas, oder aus starren klaren Kunststoffen, beispielsweise Polycarbonat oder Polymethylmethacrylat. Die Scheiben können klar oder auch getönt oder gefärbt sein. Sofern die Verbundscheibe als Windschutzscheibe verwendet wird, sollten die Außenscheibe und die Innenscheibe im zentralen Sichtbereich eine ausreichende Lichttransmission aufweisen, bevorzugt mindestens 70 % im Haupt-Durchsichtbereich A gemäß ECE-R43. Die Außenscheibe und die Innenscheibe sind bevorzugt gebogen, das heißt sie weisen eine Krümmung auf.

Die Außenscheibe, die Innenscheibe und/oder die Verbindungsschicht können geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen. Bei Sonnenschutzbeschichtungen sind spektral möglichst neutrale Beschichtungen bevorzugt.

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm, ganz besonders bevorzugt von 1,6 mm bis 2,1 mm. Beispielsweise weist die Außenscheibe eine Dicke von 2,1 mm auf und die Innenscheibe eine Dicke von 1,6 mm auf. Es kann sich bei der Außenscheibe oder insbesondere der Innenscheibe aber auch um Dünnglas mit einer Dicke von beispielsweise 0,55 mm handeln.

Die Erfindung umfasst auch eine Projektionsanordnung zur Darstellung von Informationen für einen Betrachter, mindestens umfassend eine erfindungsgemäße Verbundscheibe und einen Projektor, der von innen auf das Hologrammelement gerichtet ist. Die erfindungsgemäße Verbundscheibe kann dabei wie oben in den verschiedenen Ausführungsformen beschrieben ausgebildet sein.

Der Projektor der Projektionsanordnung sendet Licht mit Wellenlängen aus, auf die das Hologramm, bzw. bei Vorhandensein von mehr als einem Hologramm, die Hologramme des Holgrammelements ansprechen. Laserprojektoren sind bevorzugt, da sich mit diesen sehr diskrete Wellenlängen erzielen lassen.

Bei der erfindungsgemäßen Projektionsanordnung werden durch eine Welligkeit des Hologrammelements hervorgerufene optische Fehler minimiert und eine verbesserte Haltbarkeit durch Minimierung von Spannungen sowie Glasbruch erzielt.

Die Erfindung betrifft auch ein Verfahren zur Herstellung einer Verbundscheibe, wobei zumindest:
a) eine Außenscheibe, eine Verbindungsschicht, ein Hologrammelement mit mindestens einem Hologramm, eine thermoplastische Zwischenschicht mit einer Aussparung und eine Innenscheibe bereitgestellt werden,
b) ein Schichtenstapel gebildet wird, in dem die Verbindungsschicht zwischen der Außenscheibe und der Innenscheibe angeordnet ist, die thermoplastische Zwischenschicht unmittelbar benachbart zur Außenscheibe oder unmittelbar benachbart zur Innenscheibe angeordnet ist und das Hologrammelement in der Aussparung der thermoplastischen Zwischenschicht angeordnet ist,
c) der Schichtenstapel durch Lamination verbunden wird.

Das Hologrammelement kann in Schritt a) als unbelichtetes Hologrammelement mit lichtempfindlichem Material oder als das endgültige Hologrammelement mit aufgezeichnetem Hologramm bereitgestellt werden. Somit kann auch in Schritt b) die Bildung des Schichtenstapels und in Schritt c) die Lamination mit dem unbelichteten Hologrammelement oder mit dem endgültigen Hologrammelement mit aufgezeichtetem Hologrammelement erfolgen. Es versteht sich, dass das erfindungsgemäße Verfahren bei Bereitstellung des unbelichteten Hologrammelements in Schritt a) das Verfahren als zusätzlichen Schritt nach der Lamination des Schichtenstapels die Aufzeichnung mindestens eines Hologramms in dem Hologrammelement umfasst.

Wie in den einzelnen Ausführungsformen der erfindungsgemäßen Verbundscheibe erläutert, kann das Hologrammelement ein Photopolymer und mindestens eine Substratschicht umfassen. Bevorzugt umfasst das Hologrammelement ein Photopolymer und zwei Substratschichten, wobei das Photopolymer zwischen den beiden Substratschichten angeordnet ist.

Bei der Bildung des Schichtenstapels in Schritt b) kann entweder zunächst die thermoplastische Schicht angeordnet werden und dann das Hologrammelement in die Aussparung in der thermoplastischen Schicht angeordnet werden oder alternativ zunächst das Hologrammelement angeordnet werden und dann die thermoplastische Schicht mit der Aussparung um das Hologrammelement herum angeordnet werden.

Die Lamination des Schichtenstapels kann mittels geläufiger Laminationsverfahren erfolgen. Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. Alternativ sind auch autoklavfreie Verfahren möglich. An sich bekannte Vakuumsack- oder Vakuumringverfahren arbeiten beispielsweise bei etwa 200 mbar und 80 °C bis 110 °C. Der Schichtenstapel kann auch in einem Kalander zwischen mindestens einem Walzenpaar zu einer Verbundscheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Außenscheibe und die Innenscheibe innerhalb von beispielsweise etwa 60 Minuten bei verminderten Drücken von 0,01 mbar bis 800 mbar und Temperaturen von 80 °C bis 170 °C laminiert werden.

Die bei dem erfindungsgemäßen Verfahren eingesetzte thermoplastische Zwischenschicht, welche das Hologrammelement rahmenartig umgibt, bringt mehrere Vorteile. Zum einen gleicht die thermoplastische Zwischenschicht einen lokalen Dickenunterschied zwischen dem Bereich mit Hologrammelement und dem umgebenden Bereich aus, wodurch das Glasbruchrisiko während eines bei der Lamination durchgeführten Entlüftungsprozesses minimiert wird. Zum anderen wird durch die thermoplastische Zwischenschicht das Hologrammelement an Ort und Stelle gehalten. Ein Verrutschen des Hologrammelements während der Fertigung der Verbundscheibe wird somit vermieden. Außerdem wird auch durch die thermoplastische Zwischenschicht eine Welligkeit des Hologrammelements vermieden, da aufgrund der thermoplastischen Zwischenschicht die Kräfte während der Lamination gleichmäßig auf das Hologrammelement einwirken, d.h. der Druck wird während der Lamination gleichmäßig über das Hologrammelement verteilt. Ohne eine das Hologrammelement rahmenförmig umgebende thermoplastische Zwischenschicht würden bei der Lamination auf das Hologrammelement am Rand andere Kräfte wirken als in der Mitte des Hologrammelements.

Die vorstehend im Zusammenhang mit der erfindungsgemäßen Verbundscheibe beschriebenen Ausgestaltungen gelten in gleicher Weise auch für das erfindungsgemäße Verfahren und umgekehrt.

Die Erfindung betrifft auch die Verwendung einer erfindungsgemäßen Verbundscheibe als Fahrzeugscheibe in Fortbewegungsmitteln für den Verkehr auf dem Land, in der Luft oder zu Wasser, wobei die Verbundscheibe bevorzugt eine Windschutzscheibe, eine Seitenscheibe oder eine Dachscheibe ist.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: eine Draufsicht auf eine Ausführungsform einer erfindungsgemäßen Verbundscheibe,
- Fig. 2: einen Querschnitt durch die in der Fig. 1 gezeigte Ausführungsform einer erfindungsgemäßen Verbundscheibe,
- Fig. 3: einen Querschnitt durch eine weitere Ausführungsform einer erfindungsgemäßen Verbundscheibe,
- Fig. 4: einen Querschnitt durch eine Ausführungsform eines Hologrammelements,
- Fig. 5: einen Querschnitt durch eine weitere Ausführungsform eines Hologrammelements,
- Fig. 6: einen Querschnitt durch eine weitere Ausführungsform einer erfindungsgemäßen Verbundscheibe,
- Fig. 7: ein Ausführungsbeispiel eines erfindungsgemäßen Verfahrens anhand eines Flussdiagramms,
- Fig. 8: eine Aufnahme einer Gitterprojektion auf eine nicht erfindungsgemäße Verbundscheibe und
- Fig. 9: eine Aufnahme einer Gitterprojektion auf eine erfindungsgemäße Verbundscheibe.

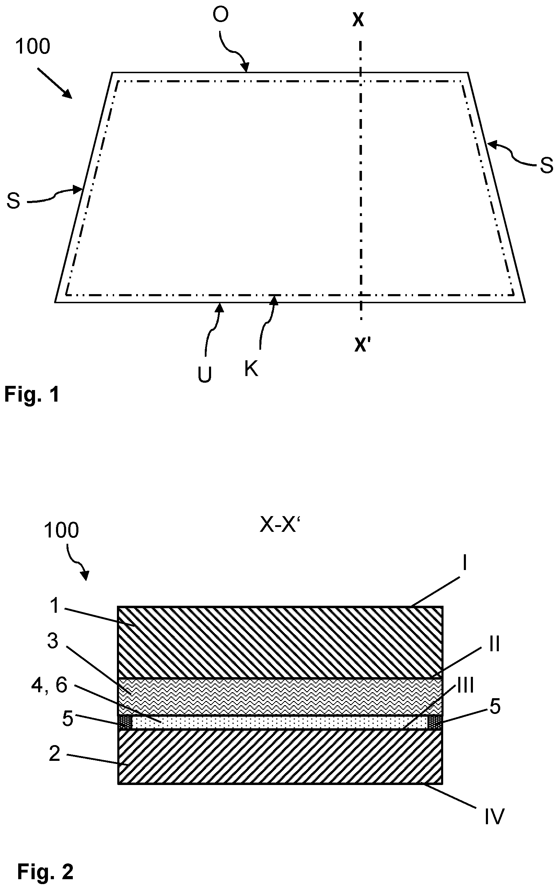

Fig. 1 zeigt eine Draufsicht auf eine Ausgestaltung einer erfindungsgemäßen Verbundscheibe 100 und in der Fig. 2 ist der Querschnitt durch die in der Fig. 1 gezeigte Ausgestaltung einer erfindungsgemäßen Verbundscheibe 100 entlang der Schnittlinie X-X' dargestellt. In der in der Fig. 1 gezeigten Ausführungsform weist die Verbundscheibe 100 eine Oberkante O, eine Unterkante U und zwei Seitenkanten S auf. Wie in der Fig. 2 dargestellt, umfasst die Verbundscheibe 100 eine Außenscheibe 1 mit einer außenseitigen Oberfläche I und einer innenraumseitigen Oberfläche II, eine Verbindungsschicht 3, ein Hologrammelement 4, eine thermoplastische Zwischenschicht 5 und eine Innenscheibe 2 mit einer außenseitigen Oberfläche III und einer innenraumseitigen Oberfläche IV. In der in der Fig. 1 und 2 gezeigten Ausführungsform ist die Verbindungsschicht 3 zwischen der Außenscheibe 1 und der Innenscheibe 2 angeordnet. Die thermoplastische Zwischenschicht 5 weist eine Aussparung 6 auf und ist unmittelbar benachbart zur Innenscheibe 2 angeordnet. Das Hologrammelement 4 ist in der Aussparung 6 angeordnet und somit ebenfalls unmittelbar benachbart zur Innenscheibe angeordnet.

Die umlaufende Kante des Hologrammelements 4 ist in der Fig. 1 mit dem Bezugszeichen K bezeichnet.

Die Außenscheibe 1 besteht beispielsweise aus Kalk-Natron-Glas und ist 2,1 mm dick. Die Innenscheibe 2 besteht beispielsweise aus Kalk-Natron-Glas und ist 1,6 mm dick.

Die Verbindungsschicht 3 ist in der in den Fig. 1 und 2 gezeigten Ausführungsform beispielsweise eine thermoplastische Schicht und besteht beispielsweise aus thermoplastischen Polyurethan (TPU) und ist 0,38 mm dick.

Die thermoplastische Zwischenschicht 5 besteht in der in den Fig. 1 und 2 gezeigten Ausführungsform beispielsweise aus thermoplastischen Polyurethan (TPU) und ist beispielsweise 120 µm dick.

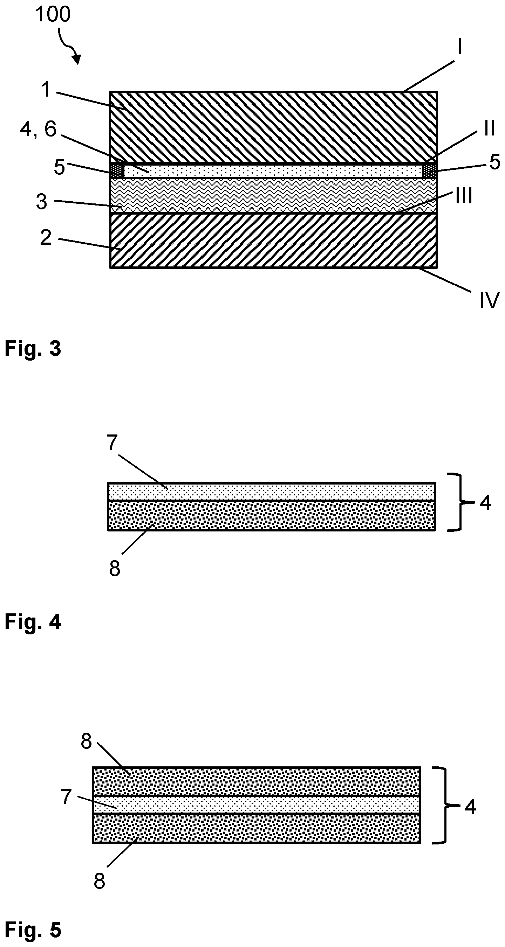

Das Hologrammelement 4 ist in der in den Fig. 1 und 2 gezeigten Ausführungsform beispielsweise wie in der Fig. 4 oder 5 dargestellt ausgebildet und beispielsweise 120 µm dick. Ist das Hologrammelement 4 wie in der Fig. 4 dargestellt ausgebildet, so ist das Hologrammelement 4 bevorzugt so angeordnet, dass die Substratschicht 8 direkt benachbart zur Verbindungsschicht 3 angeordnet ist.

In der in der Fig. 1 und 2 gezeigten Ausführungsform erstreckt sich das Hologrammelement 4 großflächig über der Verbundscheibe 100. Es versteht sich, dass auch Ausführungsformen möglich sind, in denen sich das Hologrammelement 4 über einen kleineren Bereich der Verbundscheibe 100 erstreckt, beispielsweise über 50 % der Verbundscheibe 100 oder über 80 % der Verbundscheibe 100 oder über mindestens 5 %, aber weniger als 30 % der Verbundscheibe 100.

Fig. 3 zeigt einen Querschnitt durch eine weitere Ausführungsform einer erfindungsgemäßen Verbundscheibe 100. Die in der Fig. 3 gezeigte Ausführungsform einer erfindungsgemäßen Verbundscheibe 100 unterscheidet sich von der in der Fig. 1 und Fig. 2 gezeigten nur dahingehend, dass die thermoplastische Zwischenschicht 5 nicht unmittelbar benachbart zur Innenscheibe 2, sondern unmittelbar benachbart zur Außenscheibe 1 angeordnet sind. Somit ist in der in der Fig. 3 gezeigten Ausführungsform auch das Hologrammelement 4 unmittelbar benachbart zur Außenscheibe 1 angeordnet.

Das Hologrammelement 4 ist in der in den Fig. 3 gezeigten Ausführungsform beispielsweise wie in der Fig. 4 oder 5 dargestellt ausgebildet und beispielsweise 120 µm dick. Ist das Hologrammelement 4 wie in der Fig. 4 dargestellt ausgebildet, so ist das Hologrammelement 4 bevorzugt so angeordnet, dass die Substratschicht 8 direkt benachbart zur Verbindungsschicht 3 angeordnet ist.

Fig. 4 zeigt einen Querschnitt durch eine Ausführungsform eines Hologrammelements 4, das eine erfindungsgemäße Verbundscheibe 100 aufweisen kann.

In der in der Fig. 4 gezeigten Ausführungsform eines Hologrammelements 4 umfasst dieses ein Photopolymer 7 und eine Substratschicht 8. Das Photopolymer 7 weist beispielsweise eine Dicke von 20 µm auf. Die Substratschicht 8 ist beispielsweise eine Polycarbonatschicht und weist beispielsweise eine Dicke von 100 µm auf.

In dem Photopolymer 7 des Hologrammelements 4 ist mindestens ein Hologramm hergestellt.

Fig. 5 zeigt einen Querschnitt durch eine weitere Ausführungsform eines Hologrammelements 4, das eine erfindungsgemäße Verbundscheibe 100 aufweisen kann.

In der in der Fig. 5 gezeigten Ausführungsform eines Hologrammelements 4 umfasst dieses ein Photopolymer 7, welches zwischen zwei Substratschichten 8 angeordnet ist. Das Photopolymer 7 weist beispielsweise eine Dicke von 20 µm auf. Die Substratschichten 8 sind beispielsweise Polycarbonatschichten und weisen beispielsweise jeweils eine Dicke von 50 µm auf.

In dem Photopolymer 7 des Hologrammelements 4 ist mindestens ein Hologramm hergestellt.

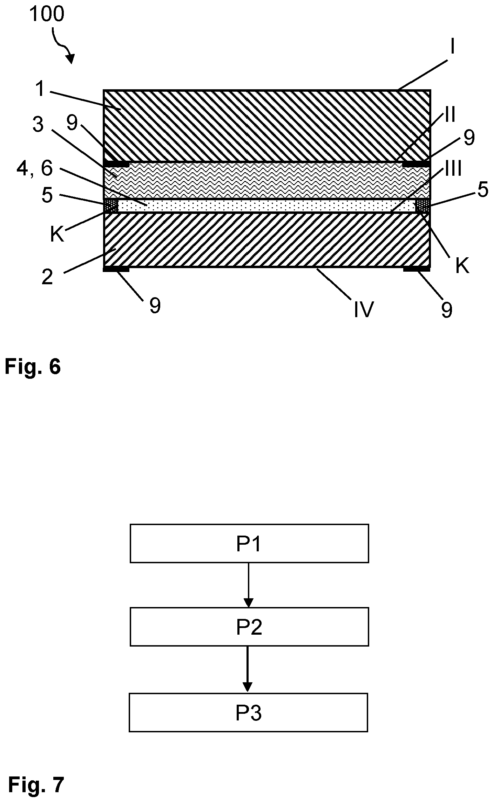

Fig. 6 zeigt einen Querschnitt durch eine weitere Ausführungsform einer erfindungsgemäßen Verbundscheibe 100. Die in der Fig. 6 gezeigte Ausführungsform einer erfindungsgemäßen Verbundscheibe 100 unterscheidet sich von der in der Fig. 1 und Fig. 2 gezeigten nur dahingehend, dass auf der innenraumseitigen Oberfläche II der Außenscheibe 1 und auf der innenraumseitigen Oberfläche IV der Innenscheibe 2 jeweils eine opake Maskierungsschicht 9 in Form eines peripheren opaken Abdeckdrucks aus einer schwarzen Emaille angeordnet ist. Die opaken Maskierungsschichten 9 verdecken in Durchsicht durch die Verbundscheibe 100 die umlaufende Kante K des Hologrammelements 4.

Fig. 7 zeigt ein Ausführungsbeispiel des erfindungsgemäßen Verfahrens zur Herstellung einer erfindungsgemäßen Verbundscheibe 100 anhand eines Flussdiagramms umfassend die Schritte:

| | |
|---|---|
| P1 | Bereitstellung einer Außenscheibe 1, einer Verbindungsschicht 3, eines Hologrammelements 4 mit mindestens einem Hologramm, einer thermoplastischen Zwischenschicht 5 mit einer Aussparung 6 und einer Innenscheibe 2. |
| P2 | Bildung eines Schichtenstapels, in dem die Verbindungsschicht 3 zwischen der Außenscheibe 1 und der Innenscheibe 2 angeordnet ist, die thermoplastische Zwischenschicht 5 unmittelbar benachbart zur Außenscheibe 1 oder unmittelbar benachbart zur Innenscheibe 2 angeordnet ist und das Hologrammelement 4 in der Aussparung 6 der thermoplastischen Zwischenschicht 5 angeordnet ist. |
| P3 | Verbinden des Schichtenstapels durch Lamination. |

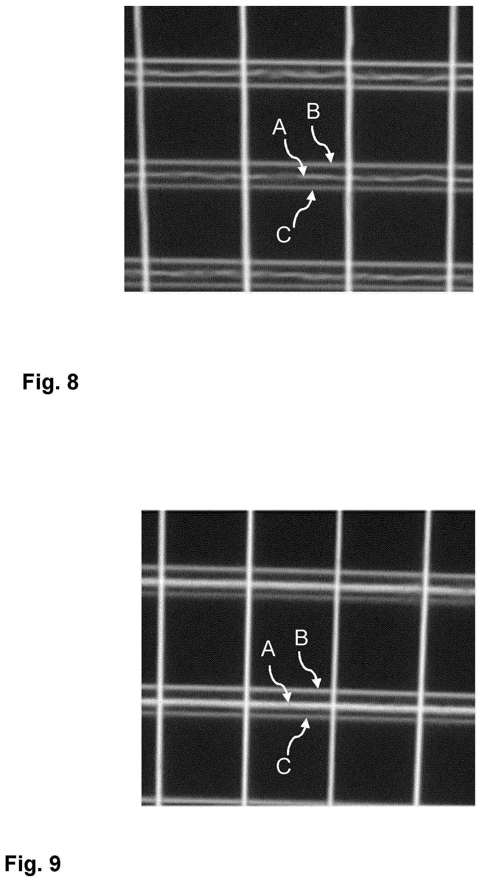

Fig. 8 zeigt eine Aufnahme einer Gitterprojektion auf eine nicht erfindungsgemäße Verbundscheibe und Fig. 9 zeigt eine Aufnahme einer Gitterprojektion auf eine erfindungsgemäße Verbundscheibe. Die Projektion auf die Verbundscheiben erfolgte jeweils unter einem Winkel von 30 ° zur Horizontalen, wobei die innenraumseitige Oberfläche der Innenscheibe jeweils die dem Projektor nächstliegende Oberfläche der Verbundscheibe war.

Für die in der Fig. 8 gezeigte Aufnahme wurde eine nicht erfindungsgemäße Verbundscheibe bereitgestellt. Die nicht erfindungsgemäße Verbundscheibe bestand aus einer Außenscheibe, einer ersten thermoplastischen Schicht, einem Hologrammelement, einer zweiten thermoplastischen Schicht und einer Innenscheibe, wobei das Hologrammelement zwischen der Außenscheibe und der Innenscheibe angeordnet war, die erste thermoplastische Zwischenschicht zwischen der Außenscheibe und dem Hologrammelement angeordnet war und die zweite thermoplastische Zwischenschicht zwischen dem Hologrammelement und der Innenscheibe angeordnet war.

Für die in der Fig. 9 gezeigte Aufnahme wurde eine erfindungsgemäße Verbundscheibe bereitgestellt. Die erfindungsgemäße Verbundscheibe war wie in der Fig. 2 gezeigt aufgebaut, wobei das Hologrammelement wie in der Fig. 5 gezeigt aufgebaut war.

In der Fig. 8 und der Fig. 9 ist mit dem Bezugszeichen A jeweils die Reflexion am Hologrammelement bezeichnet. Mit dem Bezugszeichen B ist jeweils die Reflexion an der außenseitigen Oberfläche der Außenscheibe bezeichnet und mit dem Bezugszeichen C ist jeweils die Reflexion an der innenraumseitigen Oberfläche der Innenscheibe bezeichnet.

Der Vergleich der Fig. 8 mit der Fig. 9 zeigt, dass bei der nicht erfindungsgemäßen Verbundscheibe im Gegensatz zur erfindungsgemäßen Verbundscheibe die Reflexion des Gitters an dem Hologrammelement wellenförmig ist. Somit weist das Hologrammelement in der nicht erfindungsgemäßen Verbundscheibe eine Welligkeit auf, welche sich negativ auf die Reflexionseigenschaften des Hologrammelements auswirkt. Bei der erfindungsgemäßen Verbundscheibe ist wie aus Fig. 9 ersichtlich ist, hingegen keine Welligkeit des Hologrammelements zu erkennen, die Reflexion des Gitters an dem Hologrammelement zeigt keine Wellenform. Die optischen Eigenschaften einer erfindungsgemäßen Verbundscheibe sind somit gegenüber einer nicht erfindungsgemäßen Verbundscheibe verbessert.

### Bezugszeichenliste:

- 100: Verbundscheibe

- 1: Außenscheibe
- 2: Innenscheibe
- 3: Verbindungsschicht
- 4: Hologrammelement
- 5: thermoplastische Zwischenschicht
- 6: Aussparung
- 7: Photopolymer
- 8: Subtratschicht
- 9: opake Maskierungsschicht

- O: Oberkante der Verbundscheibe 100
- U: Unterkante der Verbundscheibe 100
- S: Seitenkante der Verbundscheibe 100
- K: umlaufende Kante des Hologrammelements 4

- I: außenseitige Oberfläche der Außenscheibe 1
- II: innenraumseitige Oberfläche der Außenscheibe 1
- III: außenseitige Oberfläche der Innenscheibe 2
- IV: innenraumseitige Oberfläche der Innenscheibe 2

- X'-X: Schnittlinie

- A: Reflexion am Hologrammelement
- B: Reflexion an der außenseitigen Oberfläche der Außenscheibe
- C: Reflexion an der innenraumseitigen Oberfläche der Innenscheibe

## Patentansprüche

1. Verbundscheibe (100), mindestens umfassend
- eine Außenscheibe (1),
- eine Verbindungsschicht (3),
- ein Hologrammelement (4) mit mindestens einem Hologramm,
- eine thermoplastische Zwischenschicht (5) und
- eine Innenscheibe (2)
wobei die Verbindungsschicht (3) zwischen der Außenscheibe (1) und der Innenscheibe (2) angeordnet ist und
die thermoplastische Zwischenschicht (5) unmittelbar benachbart zur Außenscheibe (1) oder unmittelbar benachbart zur Innenscheibe (2) angeordnet ist und eine Aussparung (6) aufweist, in welcher das Hologrammelement (4) angeordnet ist.

2. Verbundscheibe (100) nach Anspruch 1, wobei das Hologrammelement (4) ein Photopolymer (7) und mindestens eine Substratschicht (8) umfasst.

3. Verbundscheibe (100) nach Anspruch 2, wobei die mindestens eine Substratschicht (8) ein polymeres Material gewählt aus Polyethylenterephthalat (PET), Polyethylen (PE), Polymethylmethacrylat (PMMA), Polycarbonat (PC), Polyamid (PA), Polyvinylchlorid (PVC) und/oder Cellulosetriacetat (TAC) enthält oder daraus besteht.

4. Verbundscheibe (100) nach Anspruch 2 oder 3, wobei die mindestens eine Substratschicht (8) eine Dicke zwischen 20 µm und 150 µm, bevorzugt zwischen 20 µm und 100 µm, aufweist.

5. Verbundscheibe (100) nach einem der Ansprüche 2 bis 4, wobei das Hologrammelement (4) ein Photopolymer (7) und eine Substratschicht (8) umfasst und das Hologrammelement (4) derart in der Aussparung (6) angeordnet ist, dass die Substratschicht (8) unmittelbar benachbart zur Verbindungsschicht (3) angeordnet ist.

6. Verbundscheibe (100) nach einem der Ansprüche 2 bis 4, wobei das Hologrammelement (4) ein Photopolymer (7) und zwei Substratschichten (8) umfasst und das Photopolymer (7) zwischen den beiden Substratschichten (8) angeordnet ist.

7. Verbundscheibe (100) nach einem der Ansprüche 1 bis 6, wobei die Verbindungsschicht (3) eine thermoplastische Schicht oder ein optisch klarer Kleber ist.

8. Verbundscheibe (100) nach einem der Ansprüche 1 bis 7, wobei die thermoplastische Zwischenschicht (5) unmittelbar benachbart zur Innenscheibe (2) angeordnet ist.

9. Verbundscheibe (100) nach einem der Ansprüche 1 bis 8, zusätzlich umfassend eine in einem umlaufenden Randbereich angeordnete opake Maskierungsschicht (9).

10. Verbundscheibe (100) nach einem der Ansprüche 1 bis 9, wobei sich das Hologrammelement (4) über mindestens 30%, bevorzugt über mindestens 50 %, besonders bevorzugt über mindestens 80 % der Verbundscheibe (100) erstreckt.

11. Verbundscheibe (100) nach einem der Ansprüche 1 bis 9, wobei sich das Hologrammelement (4) über mindestens 5 % und weniger als 30 % der Verbundscheibe (100) erstreckt.

12. Verbundscheibe (100) nach Anspruch 9, wobei sich das Hologrammelement (4) über mindestens 50 %, besonders bevorzugt über mindestens 80 % der Verbundscheibe (100) erstreckt und wobei die umlaufende Kante (K) des Hologrammelements (4) im Bereich der opaken Maskierungsschicht (9) angeordnet ist.

13. Projektionsanordnung umfassend eine Verbundscheibe (100) nach einem der Ansprüche 1 bis 12 und einen Projektor, der von innen auf das Hologrammelement (4) gerichtet ist.

14. Verfahren zur Herstellung einer Verbundscheibe (100) nach einem der Ansprüche 1 bis 12, wobei zumindest
a) eine Außenscheibe (1), eine Verbindungsschicht (3), ein Hologrammelement (4) mit mindestens einem Hologramm, eine thermoplastische Zwischenschicht (5) mit einer Aussparung (6) und eine Innenscheibe (2) bereitgestellt werden,
b) ein Schichtenstapel gebildet wird, in dem die Verbindungsschicht (3) zwischen der Außenscheibe (1) und der Innenscheibe (2) angeordnet ist, die thermoplastische Zwischenschicht (5) unmittelbar benachbart zur Außenscheibe (1) oder unmittelbar benachbart zur Innenscheibe (2) angeordnet ist und das Hologrammelement (4) in der Aussparung (6) der thermoplastischen Zwischenschicht (5) angeordnet ist,
c) der Schichtenstapel durch Lamination verbunden wird.

15. Verwendung einer Verbundscheibe (100) nach einem der Ansprüche 1 bis 12 als Fahrzeugscheibe in Fortbewegungsmitteln für den Verkehr auf dem Land, in der Luft oder zu Wasser, wobei die Verbundscheibe (100) bevorzugt eine Windschutzscheibe, eine Seitenscheibe oder eine Dachscheibe ist.
